# EUROPEAN PATENT APPLICATION

(11) **EP 4 557 839 A1**
(43) Date of publication of application: **21.05.2025**
(21) Application number: 23870117.1
(22) Date of filing: 30.08.2023
(51) Int. Cl.: H04W 52/02, H04W 72/12

(54) **DATA TRANSMISSION METHOD AND APPARATUS**

(30) Priority: 29.09.2022 CN 202211204154
(71) Applicant: Huawei Technologies Co., Ltd., Shenzhen, Guangdong 518129 (CN)
(72) Inventor: XU, Rui, Shenzhen, Guangdong 518129 (CN); CHEN, Erkai, 80992 Duesseldorf (DE); CAO, Youlong, Shenzhen, Guangdong 518129 (CN); QIN, Yi, Shenzhen, Guangdong 518129 (CN)
(74) Representative: Pfenning, Meinig & Partner mbB
(86) International application number: PCT/CN2023/115703
(87) International publication number: WO 2024/066876

(57) **Abstract**

A data transmission method is provided. Tail packet indication information indicates to stop a discontinuous reception DRX inactivity timer or not to restart the DRX inactivity timer, so that unnecessary physical downlink control channel PDCCH monitoring can be reduced, thereby reducing power consumption of a terminal, and prolonging a battery life of the terminal.

## Description

This application claims priority to Chinese Patent Application No. 202211204154.3, filed with the China National Intellectual Property Administration on September 29, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

In a wireless communication network, an extended reality (extended reality, XR) technology has advantages such as multiple viewing angles and strong interactivity, can provide brand-new visual experience for a user, and has great application value and commercial potential. XR includes technologies such as virtual reality (virtual reality, VR), augmented reality (augmented reality, AR), and mix reality (mix reality, MR), and can be widely applied to many fields such as entertainment, gaming, medical care, advertising, industry, online education, and engineering.

A terminal that receives XR data is sensitive to power. Therefore, how to reduce power consumption of the terminal is an urgent problem to be resolved.

### SUMMARY

According to a first aspect, an embodiment of this application provides a data transmission method. The method may be performed by a terminal, may be performed by a component (for example, a processor, a chip, or a chip system) of the terminal, or may be implemented by a logical module or software that can implement all or some functions of the terminal. The method includes: receiving first control information in a discontinuous reception (discontinuous reception, DRX) active time period, receiving first data on a physical downlink shared channel (physical downlink shared channel, PDSCH) based on the first control information, and stopping a DRX inactivity timer or determining not to restart the DRX inactivity timer based on first tail packet indication information. The first tail packet indication information indicates that the first data includes data of a last data packet corresponding to a data frame. Optionally, the first control information is downlink control information (downlink control information, DCI) carried on a physical downlink control channel (physical downlink control channel, PDCCH), and the DCI is used for scheduling transmission of the first data on the PDSCH.

According to the foregoing method, the first tail packet indication information can indicate, to the terminal, that the first data includes the data of the last data packet corresponding to the data frame. In other words, after the transmission of the first data is completed, transmission of any data packet corresponding to the data frame is no longer required. In this case, the terminal stops the DRX inactivity timer or determines not to restart the DRX inactivity timer based on the first tail packet indication information, so that after the DRX inactivity timer stops running, the terminal does not need to monitor the PDCCH for scheduling new data transmission. In this way, power consumption of the terminal can be reduced, and a battery life can be prolonged.

With reference to the first aspect, in some implementations of the first aspect, the first tail packet indication information is carried on the PDSCH. In this implementation, the first tail packet indication information is carried on the PDSCH scheduled by using the first control information, or it may be understood that transmission of the first tail packet indication information is performed with the PDSCH scheduled by using the first control information. In this manner, a process of exchanging the first tail packet indication information between the terminal and a radio access network device may be implemented through data transmission, and impact on existing control signaling is reduced, to simplify an implementation.

In a possible implementation in which the first tail packet indication information is carried on the PDSCH, the PDSCH carries a media access control (media access control, MAC) control element (control element, CE), and the first tail packet indication information is carried in the MAC CE. In this manner, the process of exchanging the first tail packet indication information between the terminal and the radio access network device may be implemented by using a control information element at a MAC layer.

In a possible implementation in which the first tail packet indication information is carried in the MAC CE, the MAC CE that carries the first tail packet indication information is identified by a predefined logical channel identifier (logical channel ID, LCID) or an extended logical channel identifier (extended LCID, eLCID). The LCID and the eLCID may be included in a MAC subheader. In this manner, impact on an existing MAC CE can be reduced, to simplify an implementation.

In another possible implementation in which the first tail packet indication information is carried in the MAC CE, the first tail packet indication information is carried by using a part or all of reserved bits (for example, reserved bits in an "R field") in the MAC subheader of the MAC CE. In this manner, no new MAC CE needs to be introduced, and no additional indication overheads need to be introduced.

In another possible implementation of the first tail packet indication information, the first tail packet indication information is included in the first control information. In this implementation, the first tail packet indication information may also be understood as being carried on the PDCCH that carries the first control information. In this manner, a delay of detecting the first tail packet information is short, and reliability is high.

With reference to the first aspect, in some implementations of the first aspect, the stopping a DRX inactivity timer may be understood as follows: If the DRX inactivity timer is running when the first tail packet indication information is received, the running DRX inactivity timer is stopped. In this implementation, the terminal stops the running DRX inactivity timer, so that the terminal does not need to monitor the PDCCH for scheduling the new data transmission. In this way, power consumption can be reduced.

With reference to the first aspect, in some implementations of the first aspect, the determining not to restart the DRX inactivity timer may be understood as follows: If the DRX inactivity timer is running when the first tail packet indication information is received, after the running DRX-inactivity timer expires, the DRX inactivity timer is not restarted. In this implementation, the terminal does not restart the DRX inactivity timer after the running DRX inactivity timer expires, so that after the currently running DRX inactivity timer expires, the terminal does not need to monitor the PDCCH for scheduling the new data transmission. In this way, power consumption can be reduced.

According to a second aspect, an embodiment of this application provides a data transmission method. The method may be performed by a radio access network device, may be performed by a component (for example, a processor, a chip, or a chip system) of the radio access network device, or may be implemented by a logical module or software that can implement all or some functions of the radio access network device. The method includes: sending first control information in a discontinuous reception DRX active time period. The first control information is used for scheduling transmission of first data on a PDSCH. The first control information includes first tail packet indication information, or the PDSCH carries the first tail packet indication information. The first tail packet indication information indicates that the first data includes data of a last data packet corresponding to a data frame, and the first tail packet indication information indicates to stop a DRX inactivity timer or determine not to restart the DRX inactivity timer. The sending first control information in a DRX active time period may be understood as sending the first control information to a terminal in a DRX active time period of the terminal. Optionally, the first control information is DCI carried on a PDCCH, and the DCI is used for scheduling the transmission of the first data on the PDSCH.

According to the foregoing method, the first tail packet indication information can indicate, to the terminal, that the first data includes the data of the last data packet corresponding to the data frame. In other words, after the transmission of the first data is completed, transmission of any data packet corresponding to the data frame is no longer required. In this case, based on the first tail packet indication information sent by the radio access network device, the terminal can stop the DRX inactivity timer or determine not to restart the DRX inactivity timer, so that after the DRX inactivity timer stops running, the terminal does not need to monitor the PDCCH for scheduling new data transmission. In this way, power consumption of the terminal can be reduced, and a battery life can be prolonged.

With reference to the second aspect, in some implementations of the second aspect, the first tail packet indication information is carried on the PDSCH. In this implementation, the first tail packet indication information is carried on the PDSCH scheduled by using the first control information, or it may be understood that transmission of the first tail packet indication information is performed with the PDSCH scheduled by using the first control information. In this manner, a process of exchanging the first tail packet indication information between the terminal and a radio access network device may be implemented through data transmission, and impact on existing control signaling is reduced, to simplify an implementation.

In a possible implementation in which the first tail packet indication information is carried on the PDSCH, the PDSCH carries a MAC CE, and the first tail packet indication information is carried in the MAC CE. In this manner, the process of exchanging the first tail packet indication information between the terminal and the radio access network device may be implemented by using a control information element at a MAC layer.

In a possible implementation in which the first tail packet indication information is carried in the MAC CE, the MAC CE that carries the first tail packet indication information is identified by a predefined LCID or an eLCID. The LCID and the eLCID may be included in a MAC subheader. In this manner, impact on an existing MAC CE can be reduced, to simplify an implementation.

In another possible implementation in which the first tail packet indication information is carried in the MAC CE, the first tail packet indication information is carried by using a part or all of reserved bits (for example, reserved bits in an "R field") in the MAC subheader of the MAC CE. In this manner, no new MAC CE needs to be introduced, and no additional indication overheads need to be introduced.

In another possible implementation of the first tail packet indication information, the first tail packet indication information is included in the first control information. In this implementation, the first tail packet indication information may also be understood as being carried on the PDCCH that carries the first control information. In this manner, a delay of detecting the first tail packet information is short, and reliability is high.

According to a third aspect, an embodiment of this application provides a data transmission method. The method may be performed by a terminal, may be performed by a component (for example, a processor, a chip, or a chip system) of the terminal, or may be implemented by a logical module or software that can implement all or some functions of the terminal. The method includes: receiving second control information, where the second control information is used for scheduling data transmission on M physical shared channels, and M is an integer greater than 1; and determining, based on the second control information, to skip monitoring a PDCCH in a first time period since the second control information is received. It may be understood that the physical shared channel may be a PDSCH, or may be a physical uplink shared channel (physical uplink shared channel, PUSCH). One physical shared channel may carry data corresponding to one transport block (transport block, TB), or may carry data corresponding to a plurality of TBs. The M physical shared channels may be consecutive in time, or may have time intervals. The second control information may be understood as a single piece of DCI used for scheduling data transmission on a plurality of physical shared channels.

According to the foregoing method, the second control information used for scheduling the data transmission on the plurality of physical shared channels further indicates the terminal to skip monitoring the PDCCH in a period of time, so that power consumption of the terminal can be reduced, and a battery life can be prolonged.

With reference to the third aspect, in some implementations of the third aspect, the first time period is a time period between an M^{th} physical shared channel and receiving of the second control information. In this implementation, the first time period may be understood as a time period between a moment of a last physical shared channel scheduled by using the second control information and a receiving moment of the second control information.

For example, the second control information may indicate the first time period, and the second control information may include a PDCCH monitoring adaptation indication field. It may be determined, based on a bit value of the PDCCH monitoring adaptation indication field and a predefined correspondence, to skip monitoring the PDCCH in the first time period. A maximum K0 value is indicated based on a start and length indicator value (start and length indicator value, SLIV) field included in the second control information, to determine first duration. For example, the maximum K0 value may be used as the first duration.

In the foregoing implementation, power consumption of the terminal is reduced, and subsequent data scheduling on the physical shared channel is not affected, so that capacity performance can be improved while the power consumption of the terminal is reduced.

With reference to the third aspect, in some implementations of the third aspect, the method further includes: sending feedback information, where the feedback information indicates whether the data transmission on the M physical shared channels succeeds. The first time period is a time period between sending of the feedback information and receiving of the second control information. In this implementation, the first time period may be understood as a time period between a sending moment of the feedback information and the receiving moment of the second control information. In this implementation, the terminal may additionally skip monitoring the PDCCH in a time period between the last physical shared channel scheduled by using the second control information and the sending moment of the feedback information, so that power consumption of the terminal can be further reduced.

With reference to the third aspect, in some implementations of the third aspect, the receiving second control information includes: receiving the second control information in a DRX active time period. The first time period is a time period between expiration of a DRX inactivity timer and the receiving of the second control information. The DRX inactivity timer may be understood as being started or restarted when the second control information is received. Therefore, in this implementation, duration of the first time period may also be understood as being equal to duration of the DRX inactivity timer. In this implementation, the terminal may additionally skip monitoring the PDCCH in a time period between the last physical shared channel scheduled by using the second control information and a running end moment of the DRX inactivity timer, so that power consumption of the terminal can be further reduced.

With reference to the third aspect, in some implementations of the third aspect, the receiving second control information includes: receiving the second control information in the DRX active time period. The first time period is a time period between expiration of a DRX on duration timer and the receiving of the second control information. If the DRX on duration timer is started or restarted when the second control information is received, in this implementation, the duration of the first time period may also be understood as being equal to duration of the DRX on duration timer. In this implementation, the terminal may additionally skip monitoring the PDCCH in a time period between the last physical shared channel scheduled by using the second control information and a running end moment of the DRX on duration timer, so that power consumption of the terminal can be further reduced.

With reference to the third aspect, in some implementations of the third aspect, the determining to skip monitoring a PDCCH in a first time period includes: determining, based on second tail packet indication information, to skip monitoring the PDCCH in the first time period, where the second tail packet indication information indicates that data carried on the M^{th} physical shared channel (the last physical shared channel in the M physical shared channels) includes data of a last data packet corresponding to a data frame. The second tail packet indication information can indicate, to the terminal, that the M^{th} physical shared channel in the M physical shared channels includes the data of the last data packet corresponding to the data frame. In other words, after transmission of the data carried on the M^{th} physical shared channel is completed, transmission of any data packet corresponding to the data frame is no longer required. In this case, the terminal determines, based on the second tail packet indication information, to skip monitoring the PDCCH in the first time period, so that power consumption of the terminal can be reduced, and a battery life can be prolonged.

Optionally, the second tail packet indication information may be carried on the M^{th} physical shared channel (for example, an M^{th} PDSCH), or may be included in the second control information. For a specific implementation and beneficial effects in which the second tail packet indication information is carried on the M^{th} PDSCH, refer to the descriptions in which the first tail packet indication information is carried on the PDSCH in the first aspect and the related implementations of the first aspect. Details are not described herein again. For a specific implementation and beneficial effects in which the second tail packet indication information is included in the second control information, refer to the descriptions in which the first tail packet indication information is included in the first control information in the first aspect and the related implementations of the first aspect. Details are not described herein again.

According to a fourth aspect, an embodiment of this application provides a data transmission method. The method may be performed by a radio access network device, may be performed by a component (for example, a processor, a chip, or a chip system) of the radio access network device, or may be implemented by a logical module or software that can implement all or some functions of the radio access network device. The method includes: sending second control information, where the second control information is used for scheduling data transmission on M physical shared channels, M is an integer greater than 1, and the second control information further indicates to skip monitoring a physical downlink control channel PDCCH in a first time period since the second control information. It may be understood that the physical shared channel may be a PDSCH, or may be a PUSCH. One physical shared channel may carry data corresponding to one TB, or may carry data corresponding to a plurality of TBs. The M physical shared channels may be consecutive in time, or may have time intervals. The second control information may be understood as a single piece of DCI used for scheduling data transmission on a plurality of physical shared channels.

According to the foregoing method, the second control information used for scheduling the data transmission on the plurality of physical shared channels further indicates the terminal to skip monitoring the PDCCH in a period of time, so that power consumption of the terminal can be reduced, and a battery life can be prolonged.

With reference to the fourth aspect, in some implementations of the fourth aspect, the first time period is a time period between an M^{th} physical shared channel and receiving of the second control information. In this implementation, the first time period may be understood as a time period between a moment of a last physical shared channel scheduled by using the second control information and a receiving moment of the second control information. In the foregoing implementation, power consumption of the terminal is reduced, and subsequent data scheduling on the physical shared channel is not affected, so that capacity performance can be improved while the power consumption of the terminal is reduced.

With reference to the fourth aspect, in some implementations of the fourth aspect, the method further includes: receiving feedback information, where the feedback information indicates whether the data transmission on the M physical shared channels succeeds. The first time period is a time period between receiving of the feedback information and sending of the second control information. In this implementation, the first time period may be understood as a time period between a sending moment of the feedback information and the receiving moment of the second control information. In this implementation, the terminal may additionally skip monitoring the PDCCH in a time period between the last physical shared channel scheduled by using the second control information and the sending moment of the feedback information, so that power consumption of the terminal can be further reduced.

With reference to the fourth aspect, in some implementations of the fourth aspect, the sending second control information includes: sending the second control information in a DRX active time period. The first time period is a time period between expiration of a DRX inactivity timer and the sending of the second control information. The sending the second control information in a DRX active time period may be understood as sending the second control information to a terminal in a DRX active time period of the terminal. The DRX inactivity timer may be understood as being started or restarted when the second control information is received. Therefore, in this implementation, duration of the first time period may also be understood as being equal to duration of the DRX inactivity timer. In this implementation, the terminal may additionally skip monitoring the PDCCH in a time period between the last physical shared channel scheduled by using the second control information and a running end moment of the DRX inactivity timer, so that power consumption of the terminal can be further reduced.

With reference to the fourth aspect, in some implementations of the fourth aspect, the sending second control information includes: sending the second control information in the DRX active time period. The first time period is a time period between expiration of a DRX on duration timer and the sending of the second control information. The sending the second control information in the DRX active time period may be understood as sending the second control information to the terminal in the DRX active time period of the terminal. If the DRX on duration timer is started or restarted when the second control information is received, in this implementation, the duration of the first time period may also be understood as being equal to duration of the DRX on duration timer. In this implementation, the terminal may additionally skip monitoring the PDCCH in a time period between the last physical shared channel scheduled by using the second control information and a running end moment of the DRX on duration timer, so that power consumption of the terminal can be further reduced.

With reference to the fourth aspect, in some implementations of the fourth aspect, the second control information includes second tail packet indication information, or the M^{th} physical shared channel (the last physical shared channel in the M physical shared channels) carries the second tail packet indication information. The second tail packet indication information indicates that data carried on the M^{th} physical shared channel includes data of a last data packet corresponding to a data frame, and it is further determined, based on the second tail packet indication information, to skip monitoring the PDCCH in the first time period. The second tail packet indication information can indicate, to the terminal, that the M^{th} physical shared channel in the M physical shared channels includes the data of the last data packet corresponding to the data frame. In other words, after transmission of the data carried on the M^{th} physical shared channel is completed, transmission of any data packet corresponding to the data frame is no longer required. In this case, the terminal determines, based on the second tail packet indication information, to skip monitoring the PDCCH in the first time period, so that power consumption of the terminal can be reduced, and a battery life can be prolonged.

Optionally, the second tail packet indication information may be carried on the M^{th} physical shared channel (for example, an M^{th} PDSCH), or may be included in the second control information. For a specific implementation and beneficial effects in which the second tail packet indication information is carried on the M^{th} PDSCH, refer to the descriptions in which the first tail packet indication information is carried on the PDSCH in the second aspect and the related implementations of the second aspect. Details are not described herein again. For a specific implementation and beneficial effects in which the second tail packet indication information is included in the second control information, refer to the descriptions in which the first tail packet indication information is included in the first control information in the second aspect and the related implementations of the second aspect. Details are not described herein again.

According to a fifth aspect, an embodiment of this application provides an apparatus, to implement the method according to any one of the first aspect, the third aspect, the possible implementations of the first aspect, or the possible implementations of the third aspect. The apparatus includes a corresponding unit or module configured to perform the method. The unit or module included in the apparatus can be implemented by software and/or hardware. The apparatus may be, for example, a terminal, or may be a chip, a chip system, a processor, or the like that supports the terminal in implementing the method, or may be a logical module or software that can implement all or some functions of the terminal.

According to a sixth aspect, an embodiment of this application provides an apparatus, to implement the method according to any one of the second aspect, the fourth aspect, the possible implementations of the second aspect, or the possible implementations of the fourth aspect. The apparatus includes a corresponding unit or module configured to perform the method. The unit or module included in the apparatus can be implemented by software and/or hardware. The apparatus may be, for example, a terminal, or may be a chip, a chip system, a processor, or the like that supports the terminal in implementing the method, or may be a logical module or software that can implement all or some functions of the terminal.

According to a seventh aspect, an embodiment of this application provides an apparatus, including a processor. The processor is coupled to a memory. The memory is configured to store instructions. When the instructions are executed by the processor, the apparatus is enabled to implement the method according to any one of the first aspect, the third aspect, the possible implementations of the first aspect, or the possible implementations of the third aspect.

According to an eighth aspect, an embodiment of this application provides an apparatus, including a processor. The processor is coupled to a memory. The memory is configured to store instructions. When the instructions are executed by the processor, the apparatus is enabled to implement the method according to any one of the second aspect, the fourth aspect, the possible implementations of the second aspect, or the possible implementations of the fourth aspect.

According to a ninth aspect, an embodiment of this application provides a computer-readable storage medium, and the computer-readable storage medium stores instructions. When the instructions are executed, a computer is enabled to perform the method according to any one of the first aspect, the third aspect, the possible implementations of the first aspect, or the possible implementations of the third aspect.

According to a tenth aspect, an embodiment of this application provides a computer-readable storage medium, and the computer-readable storage medium stores instructions. When the instructions are executed, a computer is enabled to perform the method according to any one of the second aspect, the fourth aspect, the possible implementations of the second aspect, or the possible implementations of the fourth aspect.

According to an eleventh aspect, an embodiment of this application provides a computer program product, and the computer program product includes computer program code. When the computer program code is run on a computer, the computer is enabled to perform the method according to any one of the first aspect, the third aspect, the possible implementations of the first aspect, or the possible implementations of the third aspect.

According to a twelfth aspect, an embodiment of this application provides a computer program product, and the computer program product includes computer program code. When the computer program code is run on a computer, the computer is enabled to perform the method according to any one of the second aspect, the fourth aspect, the possible implementations of the second aspect, or the possible implementations of the fourth aspect.

According to a thirteenth aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the third aspect, the fourth aspect, the possible implementations of the first aspect, the possible implementations of the second aspect, the possible implementations of the third aspect, or the possible implementations of the fourth aspect.

According to a fourteenth aspect, an embodiment of this application provides a communication system, including: the apparatus according to the fifth aspect and the apparatus according to the sixth aspect.

According to a fifteenth aspect, an embodiment of this application provides a communication system, including the apparatus according to the seventh aspect and the apparatus according to the eighth aspect.

It may be understood that, for beneficial effects of features corresponding to the first aspect, the second aspect, the third aspect, and the fourth aspect in the fifth aspect to the fifteenth aspect, refer to the related descriptions in the first aspect, the second aspect, the third aspect, and the fourth aspect. Details are not described again.

### BRIEF DESCRIPTION OF DRAWINGS

FIG. 1 is a diagram of a communication system to which embodiments are applied according to this application;
FIG. 2 to FIG. 5 are diagrams of several system frameworks to which embodiments of this application are applicable;
FIG. 6 is a diagram of discontinuous reception (discontinuous reception, DRX) according to an embodiment of this application;
FIG. 7 is a diagram of running of a DRX inactivity timer according to an embodiment of this application;
FIG. 8 is a diagram of a data transmission method according to an embodiment of this application;
FIG. 9 is another diagram of running of a DRX inactivity timer according to an embodiment of this application;
FIG. 10 is another diagram of running of a DRX inactivity timer according to an embodiment of this application;
FIG. 11 is a diagram of multi-channel scheduling according to an embodiment of this application;
FIG. 12 is another diagram of multi-channel scheduling according to an embodiment of this application;
FIG. 13 is another diagram of a data transmission method according to an embodiment of this application;
FIG. 14 to FIG. 17 are other diagrams of multi-channel scheduling according to embodiments of this application;
FIG. 18 is a diagram of a structure of a terminal according to an embodiment of this application;
FIG. 19 is a diagram of a structure of an apparatus according to an embodiment of this application; and
FIG. 20 is another diagram of an apparatus according to an embodiment of this application.

### DESCRIPTION OF EMBODIMENTS

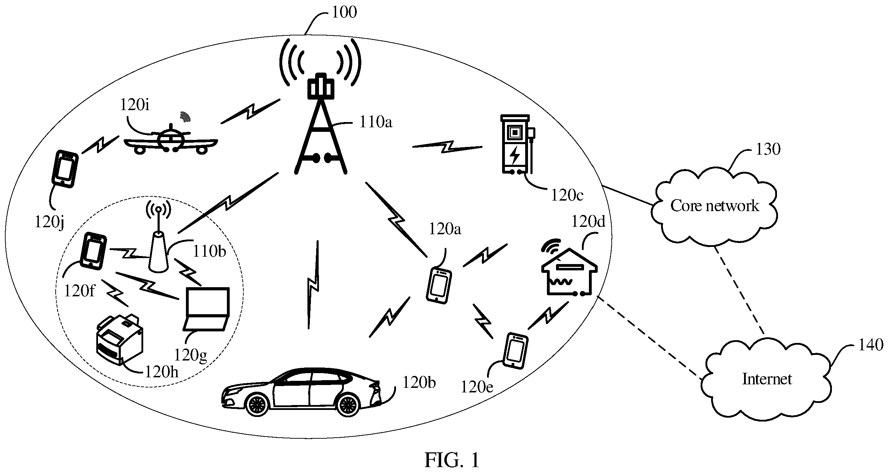

FIG. 1 is a diagram of an architecture of a communication system to which an embodiment of this application is applied. As shown in FIG. 1, the communication system includes a radio access network 100 and a core network 130. Optionally, the communication system 1000 may further include an internet 140. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different devices, functions of a core network device and logical functions of the radio access network device are integrated into a same device, or some functions of a core network device and some functions of the radio access network device are integrated into one device. A wired or wireless manner may be used for connections between terminals and between radio access network devices. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes some functions of a base station, for example, may be a central unit (central unit, CU) or a distributed unit (distributed unit, DU). The radio access network device may be a macro base station (for example, 110a in FIG. 1), may be a micro base station or an indoor station (for example, 110b in FIG. 1), or may be a relay node, a donor node, or the like. It may be understood that all or some functions of the radio access network device in this application may also be implemented by using a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the base station is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, 110a may alternatively communicate with 120i by using an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, between base stations, or between terminals may be performed by using a licensed spectrum, may be performed by using an unlicensed spectrum, or may be performed by using both the licensed spectrum and the unlicensed spectrum; or may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including a base station function. A control subsystem that includes a base station function herein may be a control center in an application scenario of the foregoing terminal, such as a smart grid, an industrial control, an intelligent transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to the terminal, where the sidelink information is carried on a sidelink channel. The information may be control information, or may be data information.

An XR technology has advantages such as a plurality of views and strong interactivity, can provide brand-new experience for a user, and has great application value and great commercial potential. XR includes technologies such as VR, AR, and MR, and can be widely applied to many fields such as entertainment, gaming, medical care, advertising, industry, online education, and engineering. The VR technology is mainly to render visual and audio scenarios, to simulate sensory stimulation of a vision and an audio in a real world to a user as much as possible. The VR technology usually requires the user to wear the XR terminal (for example, the head mounted device) to simulate vision and/or hearing of the user. The VR technology may be further used to perform action tracking on the user, to update simulated visual and/or auditory content in a timely manner. The AR technology is mainly to provide visual and/or auditory additional information or artificially generated content in a real environment perceived by the user. The user may obtain the real environment directly (for example, without sensing, processing, and rendering), or may obtain the real environment indirectly (where for example, the real environment is transferred through a sensor), and perform further enhancement processing. The MR technology is to insert some virtual elements into a physical scene to provide the user with immersive experience in which the elements are a part of a real scene.

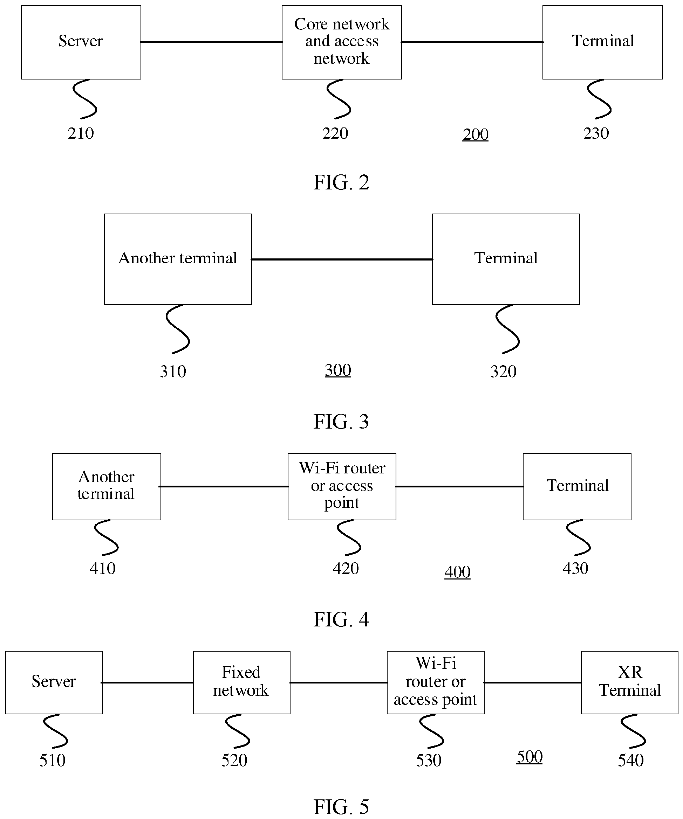

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be referred to as a transport network 220 for short, for example, an LTE network, a 5G network, or a 6G network), and a terminal 230. The server 210 may be configured to: encode, decode, and render XR source data. The transport network 220 may be configured to transmit XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 through the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between vehicle-mounted terminals. It may be understood that the another terminal 310 may be further connected to a transport network (for example, an LTE network, a 5G network, or a 6G network), to obtain XR data from the transport network, or send data to the transport network.

FIG. 4 is a diagram of another scenario to which an embodiment of this application is applicable. FIG. 4 shows a system 400, including a terminal 430, a Wi-Fi router or Wi-Fi access point 420 (which may be referred to as a Wi-Fi apparatus 420 for short), and another terminal 410. The another terminal 410 is a terminal other than the terminal 430. The another terminal 410 may transmit XR data to the terminal 430 through the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device through the Wi-Fi router, the Wi-Fi access point, or the set-top box, and present the XR data to a user.

FIG. 5 is a diagram of another scenario to which an embodiment of this application is applicable. FIG. 5 shows a system 500, including a server 510, a fixed network 520, a Wi-Fi router or Wi-Fi access point 530 (which may be referred to as a Wi-Fi apparatus 530 for short), and a terminal 540. The server 510 may be configured to: encode, decode, and render XR source data, and transmit XR data to the terminal 540 through the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data to the terminal 540 through the operator network 520 and the Wi-Fi apparatus 530.

It may be understood that FIG. 2 to FIG. 5 are merely examples of several scenarios to which embodiments of this application are applicable, and are not intended to limit a scenario to which embodiments of this application are applicable.

The following describes technical solutions of this application with reference to the accompanying drawings.

With gradual penetration of some multimedia services with high real-time performance and a large data capacity into a communication system, and an increasingly lightweight design of a terminal, a battery life of the terminal becomes one of focuses of a user. For example, for an XR service, the user increasingly expects to improve experience by using a head mounted terminal like a head mounted display (head mounted display, HMD) or smart glasses (for example, VR glasses and AR glasses). However, the head mounted terminal is limited by a size, has a low battery capacity, and is expected to be worn for long time. Therefore, power consumption control of the head mounted terminal becomes an important part in a process of using the head mounted terminal. For another example, for long-time cloud gaming or video transmission, the user also expects that the terminal has a long battery life. Therefore, power consumption control of the terminal is also an important part in a process of using the terminal.

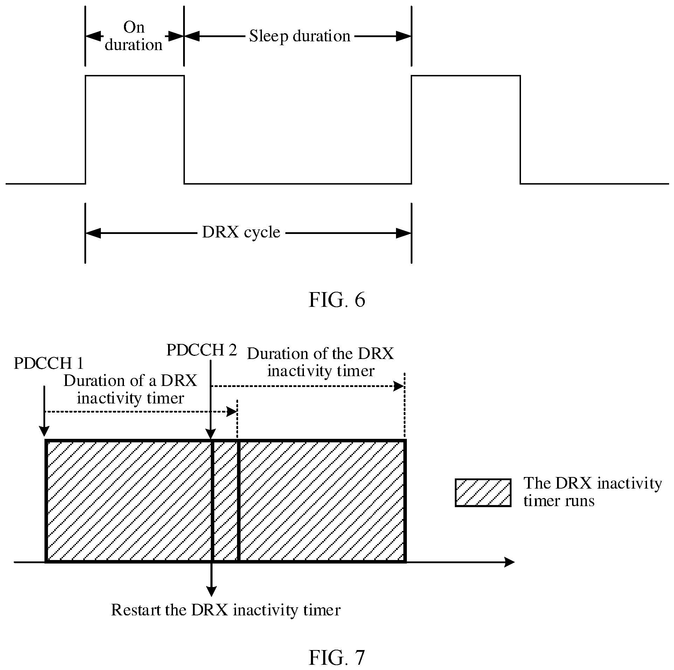

A discontinuous reception (discontinuous reception, DRX) mechanism can reduce power consumption of the terminal. The DRX mechanism is generally configured based on a cycle, and on duration of a DRX cycle (DRX cycle) may be configured to implement the DRX mechanism. The DRX cycle may also be referred to as DRX cycle duration, and the DRX cycle duration may be understood as specific DRX cycle duration. FIG. 6 is used as an example. The DRX cycle includes on duration and sleep duration. The on duration (on duration) may also be referred to as wake-up duration, activity duration, on-duration, or the like. A name of the on duration is not limited in this application. The terminal may monitor a physical downlink control channel (physical downlink control channel, PDCCH) from a radio access network device in the on duration. The sleep duration may also be referred to as dormancy duration, inactivity duration, closed-duration, or the like. A name of the sleep duration is not limited in this application. The terminal may not monitor the PDCCH in the sleep duration, to reduce power overheads.

Duration of a DRX on duration timer (which may be represented as drx-onDurationTimer) is equal to the on duration in the DRX cycle duration, and time at which the DRX on duration timer is started may be understood as start time of the DRX cycle duration. After being started, the DRX on duration timer is in a running state when the DRX on duration timer has not run for the duration of the DRX on duration time, running duration corresponds to the on duration in the DRX cycle duration, and the terminal may monitor the PDCCH. That the DRX on duration timer expires (has run for the duration of the DRX on duration timer) may be understood as that the on duration in the DRX cycle duration ends, and the terminal enters the sleep duration, and may not monitor the PDCCH, to reduce power overheads.

In the DRX mechanism, when receiving a PDCCH that carries downlink control information (downlink control information, DCI) indicating new data transmission, the terminal starts or restarts a DRX inactivity timer (which may be represented as drx-InactivityTimer). During running of the DRX inactivity timer, the terminal continues to monitor the PDCCH. The DCI indicating the new data transmission may be understood as that the DCI includes an indicator indicating the new data transmission. It may be understood that the new data transmission herein is relative to data retransmission. For example, the DCI that is carried on the PDCCH and that is for scheduling data transmission includes a new data indicator (new data indicator, NDI), and the indicator may indicate the new data transmission. Duration of the DRX inactivity timer may be understood as duration of an active time period since the terminal is scheduled. In the active time period, the terminal may continue to monitor the PDCCH. Generally, after being scheduled to send or receive newly transmitted data, the terminal probably continues to be scheduled subsequently. Therefore, after the terminal is scheduled to perform new data transmission, the DRX inactivity timer is started to enable the terminal to continue to monitor the PDCCH, so that a scheduling delay can be reduced, and the terminal can monitor, in a more timely manner, the DCI that is carried on the PDCCH and that is for scheduling data transmission. After the DRX inactivity timer is started, and when the DRX inactivity timer is in a running state if running does not reach the duration of the DRX inactivity timer, the terminal may continue to monitor the PDCCH. When the DRX inactivity timer expires (after the running reaches the duration of the DRX inactivity timer), this may be understood as that the active time period ends. If the terminal has entered the sleep duration in this case, the terminal may not monitor the PDCCH, to reduce power overheads.

Running duration of the DRX on duration timer or the DRX inactivity timer may also be referred to as a DRX active time period. It may be understood that the DRX active time period may further include running duration of another DRX timer (for example, a DRX retransmission timer).

For example, refer to FIG. 7. When receiving a PDCCH 1 that carries the DCI indicating the new data transmission, the terminal starts the DRX inactivity timer, and continues to monitor the PDCCH during the running of the DRX inactivity timer. When receiving, during the running of the DRX inactivity timer, another PDCCH 2 that carries the DCI indicating the new data transmission, the terminal restarts the DRX inactivity timer, and continues to monitor the PDCCH during the running of the DRX inactivity timer.

The foregoing mechanism can enable the terminal to complete data transmission in one DRX cycle in a more timely manner, so that a data transmission delay can be reduced. However, because the terminal needs to continuously monitor the PDCCH during the running of the DRX inactivity timer, power consumption of the terminal is also increased. This reduces a battery life of the terminal that receives XR data, and is not conducive to power consumption control of the terminal.

This application mainly provides a method from a perspective of reducing the power consumption of the terminal. Tail packet indication information indicates to stop the DRX inactivity timer or not to restart the DRX inactivity timer, so that unnecessary PDCCH monitoring can be reduced, to reduce the power consumption of the terminal, and prolong the battery life of the terminal. It may be understood that the method provided in this application is not intended to limit a data service type to which the method is applied, and is also applicable to a data service type other than XR and/or video service data.

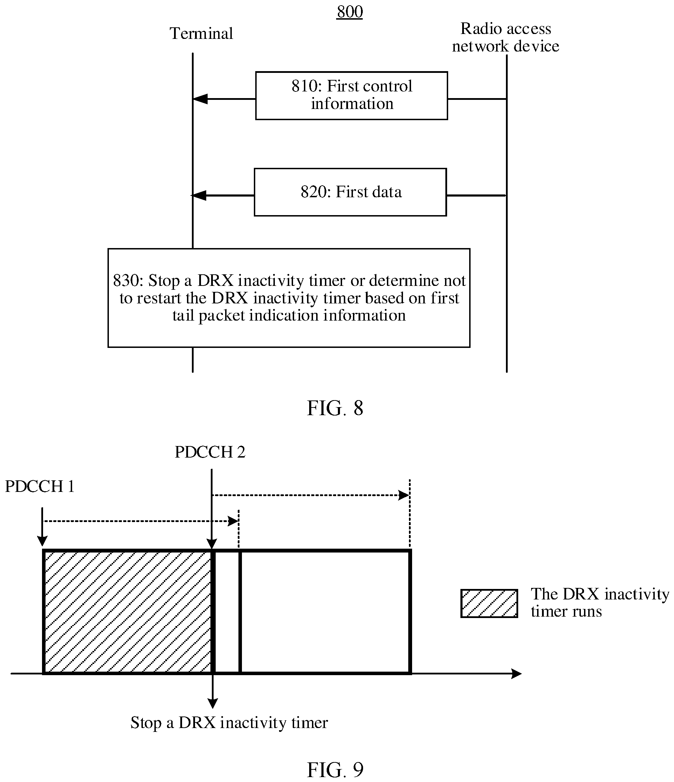

FIG. 8 is a diagram of interaction in a data transmission method 800 according to an embodiment of this application. In FIG. 8, the method is illustrated by using an example in which a radio access network device and a terminal perform the interaction. However, an execution body of the interaction is not limited in this application. For example, the radio access network device in FIG. 8 may alternatively be a chip, a chip system, or a processor that supports the radio access network device in implementing the method, or may be a logical module or software that can implement all or some functions of the radio access network device. The terminal in FIG. 8 may alternatively be a chip, a chip system, or a processor that supports the terminal in implementing the method, or may be a logical module or software that can implement all or some functions of the terminal. As shown in FIG. 8, the method 800 in this embodiment may include part 810, part 820, and part 830.

Part 810: The radio access network device sends first control information to the terminal in a DRX active time period of the terminal, where the first control information is used for scheduling transmission of first data on a physical downlink shared channel (physical downlink shared channel, PDSCH). Correspondingly, the terminal receives the first control information in the DRX active time period. The first control information may be DCI carried on a PDCCH, and the DCI is used for scheduling the transmission of the first data on the PDSCH.

Part 820: The terminal receives, on the PDSCH, the first data from the radio access network device based on the first control information. For example, the terminal may receive, on a corresponding scheduling resource, the first data from the radio access network device based on the scheduling resource that is for the transmission of the first data on the PDSCH and that is indicated by the first control information.

Part 830: The terminal stops a DRX inactivity timer or determines not to restart the DRX inactivity timer based on first tail packet indication information. The first tail packet indication information indicates that the first data includes data of a last data packet corresponding to a data frame.

It may be understood that an execution sequence of part 820 and part 830 is not limited in this application. Part 820 may be performed before part 830, or part 830 may be performed before part 820, or part 820 and part 830 may be simultaneously performed.

In the method 800, the first tail packet indication information can indicate, to the terminal, that the first data includes the data of the last data packet corresponding to the data frame. In other words, after the transmission of the first data is completed, transmission of any data packet corresponding to the data frame is no longer required. In this case, the terminal stops the DRX inactivity timer or determines not to restart the DRX inactivity timer based on the first tail packet indication information, so that after the DRX inactivity timer stops running, the terminal does not need to monitor the PDCCH for scheduling new data transmission. In this way, power consumption of the terminal can be reduced, and a battery life can be prolonged.

In a possible implementation of the first tail packet indication information, the first tail packet indication information is carried on the PDSCH in the method 800. In this implementation, the first tail packet indication information is carried on the PDSCH scheduled by using the first control information, or it may be understood that transmission of the first tail packet indication information is performed with the PDSCH scheduled by using the first control information. In this manner, a process of exchanging the first tail packet indication information between the terminal and the radio access network device may be implemented through data transmission, and impact on existing control signaling is reduced, to simplify an implementation.

In a possible implementation in which the first tail packet indication information is carried on the PDSCH, the PDSCH carries a media access control (media access control, MAC) control element (control element, CE), and the first tail packet indication information is carried in the MAC CE. In this manner, the process of exchanging the first tail packet indication information between the terminal and the radio access network device may be implemented by using a control information element at a MAC layer.

In a possible implementation in which the first tail packet indication information is carried in the MAC CE, the MAC CE that carries the first tail packet indication information is identified by a predefined logical channel identifier (logical channel ID, LCID) or an extended logical channel identifier (extended LCID, eLCID). The LCID and the eLCID may be included in a MAC subheader. In this manner, impact on an existing MAC CE can be reduced, to simplify an implementation.

For example, as shown in Table 1, one of reserved code values (codepoints)/indexes (indexes) (35 to 44) corresponding to the LCID may be used to identify the MAC CE that carries the first tail packet indication information.

**Table 1**

| **Codepoint/Index** | **LCID values** |
|---|---|
| 0 | CCCH of a size of 64 bits (referred to as a "CCCH 1" in TS 38.331 [5]) |
| 1 to 32 | Identifier of the logical channel |
| 33 | Extended logical channel ID field (two-octet eLCID field) |
| 34 | Extended logical channel ID field (one-octet eLCID field) |
| 35 to 44 | Reserved |
| 45 | Truncated sidelink BSR |
| 46 | Sidelink BSR |
| 47 | Reserved |
| 48 | LBT failure (four octets) |
| 49 | LBT failure (one octet) |
| 50 | BFR (one octet Cᵢ) |
| 51 | Truncated BFR (one octet Cᵢ) |
| 52 | CCCH of a size of 48 bits (referred to as a "CCCH" in TS 38.331 [5]) |
| 53 | Recommended bit rate query |
| 54 | Multiple entry PHR (four octets Cᵢ) |
| 55 | Configured grant confirmation |
| 56 | Multiple entry PHR (one octet Cᵢ) |
| 57 | Single entry PHR |
| 58 | C-RNTI |
| 59 | Short truncated BSR |
| 60 | Long truncated BSR |
| 61 | Short BSR |
| 62 | Long BSR |
| 63 | Padding |

For another example, as shown in Table 2, one of reserved code values (codepoints)/indexes (indexes) (which are respectively 0 to 249 and 64 to 313) corresponding to the eLCID may be used to identify the MAC CE that carries the first tail packet indication information.

**Table 2**

| **Codepoint** | **Index** | **LCID values** |
|---|---|---|
| 0 to 249 | 64 to 313 | Reserved |
| 250 | 314 | BFR (four octets Cᵢ) |
| 251 | 315 | Truncated BFR (four octets Cᵢ) |
| 252 | 316 | Multiple entry configured grant confirmation |
| 253 | 317 | Sidelink configured grant confirmation |
| 254 | 318 | Desired guard symbols |
| 255 | 319 | Pre-emptive BSR |

In another possible implementation in which the first tail packet indication information is carried in the MAC CE, the first tail packet indication information is carried by using a part or all of reserved bits (for example, reserved bits in an "R field") in the MAC subheader of the MAC CE. For example, when one reserved bit is set to "1", it indicates that the MAC CE carries the first tail packet indication information; or when the reserved bit is set to "0", it indicates that the MAC CE does not carry the first tail packet indication information. For another example, when one reserved bit is set to "0", it indicates that the MAC CE carries the first tail packet indication information; or when the reserved bit is set to "1", it indicates that the MAC CE does not carry the first tail packet indication information. In this manner, no new MAC CE needs to be introduced, and no additional indication overheads need to be introduced.

In another possible implementation of the first tail packet indication information, the first tail packet indication information is included in the first control information in the method 800. In this implementation, the first tail packet indication information may also be understood as being carried on the PDCCH that carries the first control information. For example, when one predefined bit in the first control information is set to "1", it indicates that the first control information includes the first tail packet indication information; or when the predefined bit is set to "0", it indicates that the first control information does not include the first tail packet indication information. For another example, when one predefined bit in the first control information is set to "0", it indicates that the first control information includes the first tail packet indication information; or when the predefined bit is set to "1", it indicates that the first control information does not include the first tail packet indication information. In this manner, a delay of detecting the first tail packet information is short, and reliability is high.

In part 830, the stopping a DRX inactivity timer may be understood as follows: If the DRX inactivity timer is running when the first tail packet indication information is received, the running DRX inactivity timer is stopped. FIG. 9 is used as an example. When receiving a PDCCH 1 that carries DCI indicating new data transmission, the terminal starts the DRX inactivity timer, continues to monitor the PDCCH during running of the DRX inactivity timer, and receives another PDCCH 2 that carries the DCI indicating the new data transmission. In an example in which the first tail packet indication information is included in the first control information, the DCI that indicates the new data transmission and that is carried on the PDCCH 2 may be understood as the first control information. After the terminal receives the first tail packet indication information in the first control information carried on the PDCCH 2, because the DRX inactivity timer is running, the terminal stops the running DRX inactivity timer, so that the terminal does not need to monitor the PDCCH for scheduling the new data transmission. In this way, power consumption can be reduced.

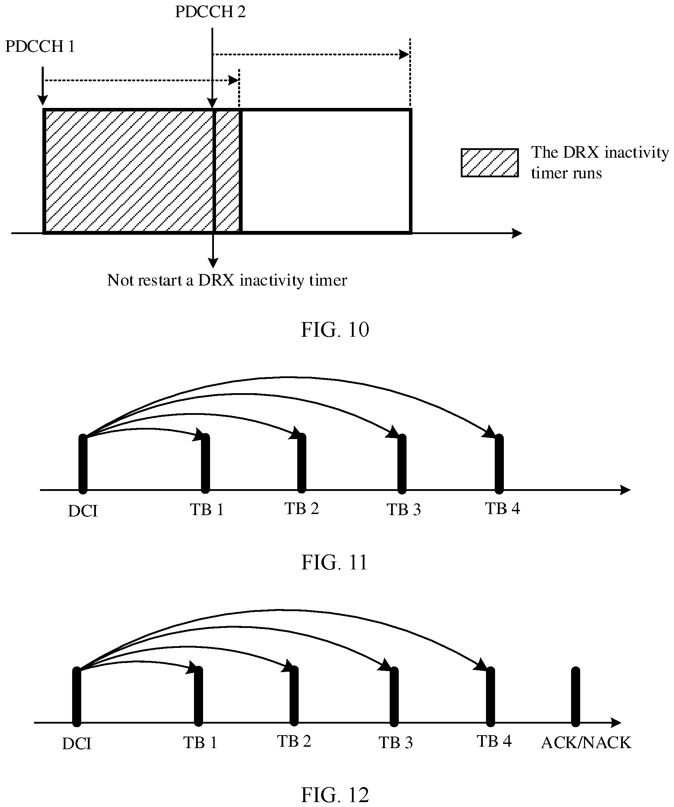

In part 830, the determining not to restart the DRX inactivity timer may be understood as follows: If the DRX inactivity timer is running when the first tail packet indication information is received, after the running DRX-inactivity timer expires, the DRX inactivity timer is not restarted. FIG. 10 is used as an example. When receiving a PDCCH 1 that carries DCI indicating new data transmission, the terminal starts the DRX inactivity timer, continues to monitor the PDCCH during running of the DRX inactivity timer, and receives another PDCCH 2 that carries the DCI indicating the new data transmission. In an example in which the first tail packet indication information is included in the first control information, the DCI that indicates the new data transmission and that is carried on the PDCCH 2 may be understood as the first control information. After the terminal receives the first tail packet indication information in the first control information carried on the PDCCH 2, because the DRX inactivity timer is running, the terminal does not restart the DRX inactivity timer after the running DRX inactivity timer expires, so that after the currently running DRX inactivity timer expires, the terminal does not need to monitor the PDCCH for scheduling the new data transmission. In this way, power consumption can be reduced.

A mechanism of scheduling a plurality of physical shared channels by using a single piece of DCI may also reduce power consumption of the terminal. In this mechanism, the radio access network device sends a single piece of DCI to the terminal, and the single piece of DCI is used for scheduling data transmission on at least two physical shared channels. The physical shared channel may be a PDSCH, or may be a physical uplink shared channel (physical uplink shared channel, PUSCH). One physical shared channel may carry data corresponding to one transport block (transport block, TB), or may carry data corresponding to a plurality of TBs. The plurality of physical shared channels scheduled by using the single piece of DCI may be consecutive in time, or may have time intervals.

FIG. 11 is used as an example. The terminal receives DCI from the radio access network device, and four TBs (which are respectively a TB 1 to a TB 4) are scheduled by using the DCI for transmission on four physical shared channels.

FIG. 12 is used as an example. The terminal receives DCI from the radio access network device, and four TBs (which are respectively a TB 1 to a TB 4) are scheduled by using the DCI for transmission on four PDSCHs. After receiving the plurality of PDSCHs scheduled by using the DCI, the terminal sends feedback information to the radio access network device, where the feedback information indicates whether transmission of data of transport blocks carried on the plurality of PDSCHs succeeds.

For example, when transmission of all of the TB 1 to the TB 4 succeeds, the feedback information indicates a positive acknowledgment (acknowledgement, ACK). When transmission of at least one of the TB 1 to the TB 4 is incorrect, the feedback information indicates a negative acknowledgment (negative acknowledgement, NACK).

For another example, the feedback information may separately indicate whether transmission of each TB succeeds. For example, when transmission of the TB 1 to the TB 3 succeeds and transmission of the TB 4 fails, the feedback information indicates {ACK, ACK, ACK, NACK}.

In the foregoing mechanism, although data transmission on the plurality of physical shared channels can be scheduled by using the single piece of DCI, if there is a time interval between the plurality of physical shared channels, the terminal still monitors the PDCCH, to increase power consumption of the terminal. This reduces a battery life of the terminal that receives XR data, and is not conducive to power consumption control of the terminal.

This application mainly provides another method from a perspective of reducing the power consumption of the terminal. The DCI used for scheduling the data transmission on the plurality of physical shared channels also indicates to skip or stop monitoring the PDCCH, so that unnecessary PDCCH monitoring can be reduced, to reduce the power consumption of the terminal, and prolong the battery life of the terminal. It may be understood that the method provided in this application is not intended to limit a data service type to which the method is applied, and is also applicable to a data service type other than XR and/or video service data.

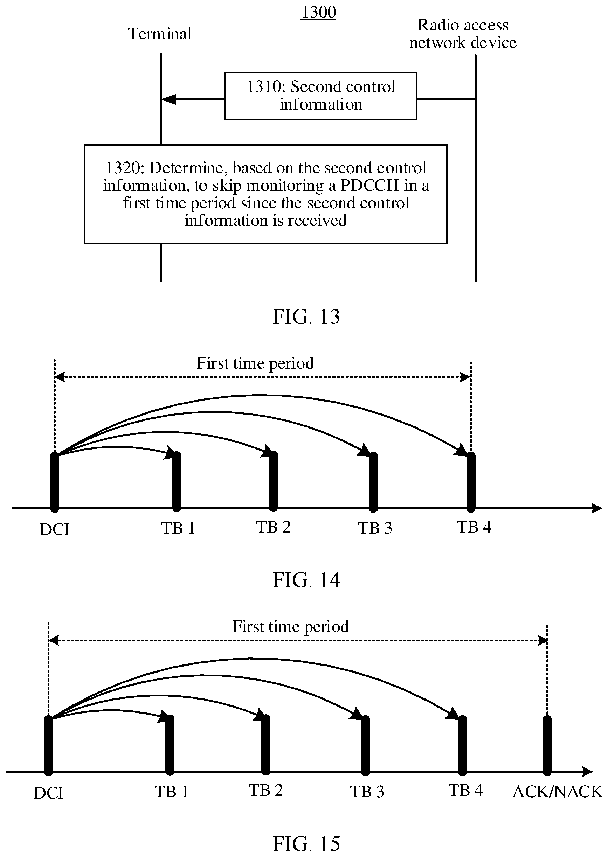

FIG. 13 is a diagram of interaction in a data transmission method 1300 according to an embodiment of this application. In FIG. 13, the method is illustrated by using an example in which a radio access network device and a terminal perform the interaction. However, an execution body of the interaction is not limited in this application. For example, the radio access network device in FIG. 13 may alternatively be a chip, a chip system, or a processor that supports the radio access network device in implementing the method, or may be a logical module or software that can implement all or some functions of the radio access network device. The terminal in FIG. 13 may alternatively be a chip, a chip system, or a processor that supports the terminal in implementing the method, or may be a logical module or software that can implement all or some functions of the terminal. As shown in FIG. 13, the method 1300 in this embodiment may include part 1310 and part 1320.

Part 1310: The radio access network device sends second control information to the terminal, where the second control information is used for scheduling data transmission on M physical shared channels, and M is an integer greater than 1. The second control information further indicates to skip monitoring a PDCCH in a first time period since the second control information. Correspondingly, the terminal receives the second control information. The second control information may be DCI carried on the PDCCH, and the DCI is used for scheduling the data transmission on the M physical shared channels. The second control information may be understood as a single piece of DCI used for scheduling data transmission on a plurality of physical shared channels.

Part 1320: The terminal determines, based on the second control information, to skip monitoring the PDCCH in the first time period since the second control information is received.

In the method 1300, the second control information used for scheduling the data transmission on the plurality of physical shared channels further indicates the terminal to skip monitoring the PDCCH in a period of time, so that power consumption of the terminal can be reduced, and a battery life can be prolonged.

In a possible implementation of the first time period, the first time period is a time period between an M^{th} physical shared channel and receiving of the second control information. In this implementation, the first time period may be understood as a time period between a moment of a last physical shared channel scheduled by using the second control information and a receiving moment of the second control information.

In a possible implementation of indicating the first time period, the second control information may indicate the first time period. The second control information may include a PDCCH monitoring adaptation indication field. The terminal may determine, based on a bit value of the PDCCH monitoring adaptation indication field and a predefined correspondence, to skip monitoring the PDCCH in the first time period.

For example, the radio access network device may configure, for the terminal by using a PDCCHSkipDurationList-R17 information element, duration for skipping monitoring the PDCCH. For example, a possible value of the PDCCHSkipDurationList-R17 information element is {1, 10, Single DCI}. A correspondence between the bit value of the PDCCH monitoring adaptation indication field included in the second control information and an indicated terminal behavior may be shown in Table 3 below.

**Table 3**

| PDCCH monitoring adaptation indication field | Indicated terminal behavior |
|---|---|
| One bit with a bit value of "0"; or two bits with a bit value of "00" | Not skip monitoring a PDCCH |
| One bit with a bit value of "1 "; or two bits with a bit value of "01" | Skip monitoring the PDCCH in duration corresponding to a 1^{st} parameter in a PDCCHSkipDurationList-R17 field |
| Two bits with a bit value of "10" | Skip monitoring the PDCCH in duration corresponding to a 2^{nd} parameter in the PDCCHSkipDurationList-R17 field |
| Two bits with a bit value of "11" | Skip monitoring the PDCCH in duration (first duration) corresponding to a 3^{rd} parameter in the PDCCHSkipDurationList-R17 field. |

As shown in Table 3 above, when the bit value of the PDCCH monitoring adaptation indication field is "11", the terminal may determine, based on the correspondence shown in Table 3, to skip monitoring the PDCCH in duration (namely, the first duration) corresponding to the single DCI. The terminal may indicate a maximum K0 value based on a start and length indicator value (start and length indicator value, SLIV) field included in the second control information, to determine the first duration. For example, the maximum K0 value may be used as the first duration. When the bit value of the PDCCH monitoring adaptation indication field is "0" or "00", the terminal device may determine, based on the correspondence shown in Table 3, that there is no need to skip monitoring the PDCCH, and may continue to monitor the PDCCH. When the bit value of the PDCCH monitoring adaptation indication field is "1" or "01", the terminal device may determine, based on the correspondence shown in Table 3, that duration in which PDCCH monitoring needs to be skipped is one slot. When the bit value of the PDCCH monitoring adaptation indication field is "10", the terminal device may determine, based on the correspondence shown in Table 3, that duration in which PDCCH monitoring needs to be skipped is 10 slots.

FIG. 14 is used as an example. The terminal receives DCI (the second control information) from the radio access network device, and four TBs (which are respectively a TB 1 to a TB 4) are scheduled by using the DCI for transmission on M=4 physical shared channels. A first time period shown in the figure is a time period between a moment of a last physical shared channel ((M=4)^{th} physical shared channel) scheduled by using the DCI and a receiving moment of the DCI.

In the foregoing implementation, power consumption of the terminal is reduced, and subsequent data scheduling on the physical shared channel is not affected, so that capacity performance can be improved while the power consumption of the terminal is reduced.

In another possible implementation of the first time period, the method 1300 further includes: The terminal sends feedback information to the radio access network device, where the feedback information indicates whether the data transmission on the M physical shared channels succeeds. The M physical shared channels may be M PDSCHs. For example descriptions of the feedback information, refer to the descriptions of the feedback information in FIG. 12. Details are not described herein again. In this case, the first time period is a time period between sending of the feedback information and receiving of the second control information. In this implementation, the first time period may be understood as a time period between a sending moment of the feedback information and the receiving moment of the second control information. In this implementation, the terminal may additionally skip monitoring the PDCCH in a time period between the last physical shared channel scheduled by using the second control information and the sending moment of the feedback information, so that power consumption of the terminal can be further reduced.

FIG. 15 is used as an example. The terminal receives DCI (the second control information) from the radio access network device, and four TBs (which are respectively a TB 1 to a TB 4) are scheduled by using the DCI for transmission on M=4 PDSCHs. After receiving the plurality of PDSCHs scheduled by using the DCI, the terminal sends feedback information (an ACK/a NACK) to the radio access network device, where the feedback information indicates whether transmission of data of transport blocks carried on the plurality of PDSCHs succeeds. A first time period shown in the figure is a time period between a sending moment of the feedback information and a receiving moment of the DCI.

Optionally, in part 1320, that the terminal determines to skip monitoring the PDCCH in the first time period includes: The terminal determines, based on second tail packet indication information, to skip monitoring the PDCCH in the first time period, where the second tail packet indication information indicates that data carried on the M^{th} physical shared channel (the last physical shared channel in the M physical shared channels) in the M physical shared channels includes data of a last data packet corresponding to a data frame. The second tail packet indication information can indicate, to the terminal, that the M^{th} physical shared channel in the M physical shared channels includes the data of the last data packet corresponding to the data frame. In other words, after transmission of the data carried on the M^{th} physical shared channel is completed, transmission of any data packet corresponding to the data frame is no longer required. In this case, the terminal determines, based on the second tail packet indication information, to skip monitoring the PDCCH in the first time period, so that power consumption of the terminal can be reduced, and a battery life can be prolonged.

It may be understood that, when the second tail packet indication information is not received, it indicates that transmission of a data packet corresponding to the data frame is not completed. In this case, the terminal may skip monitoring the PDCCH in a time period between the M^{th} physical shared channel and the receiving of the second control information, but still monitor the PDCCH in a time period between the M^{th} physical shared channel and the sending moment of the feedback information, to complete transmission of a remaining data packet of the data frame.

The second tail packet indication information may be carried on the M^{th} physical shared channel (for example, an M^{th} PDSCH), or may be included in the second control information. For a specific implementation in which the second tail packet indication information is carried on the M^{th} PDSCH, refer to the descriptions in which the first tail packet indication information is carried on the PDSCH in the method 800. Details are not described herein again. For a specific implementation in which the second tail packet indication information is included in the second control information, refer to the descriptions in which the first tail packet indication information is included in the first control information in the method 800. Details are not described herein again.

In another possible implementation of the first time period, the first time period may be used in a DRX mechanism. Specifically, in part 1310, that the radio access network device sends second control information to the terminal includes: The radio access network device sends the second control information to the terminal in a DRX active time period. That the terminal receives the second control information includes: The terminal receives the second control information in the DRX active time period. The first time period is a time period between expiration of a DRX inactivity timer and the receiving of the second control information. The DRX inactivity timer may be understood as being started or restarted when the second control information is received. Therefore, in this implementation, duration of the first time period may also be understood as being equal to duration of the DRX inactivity timer. In this implementation, the terminal may additionally skip monitoring the PDCCH in a time period between the last physical shared channel scheduled by using the second control information and a running end moment of the DRX inactivity timer, so that power consumption of the terminal can be further reduced.

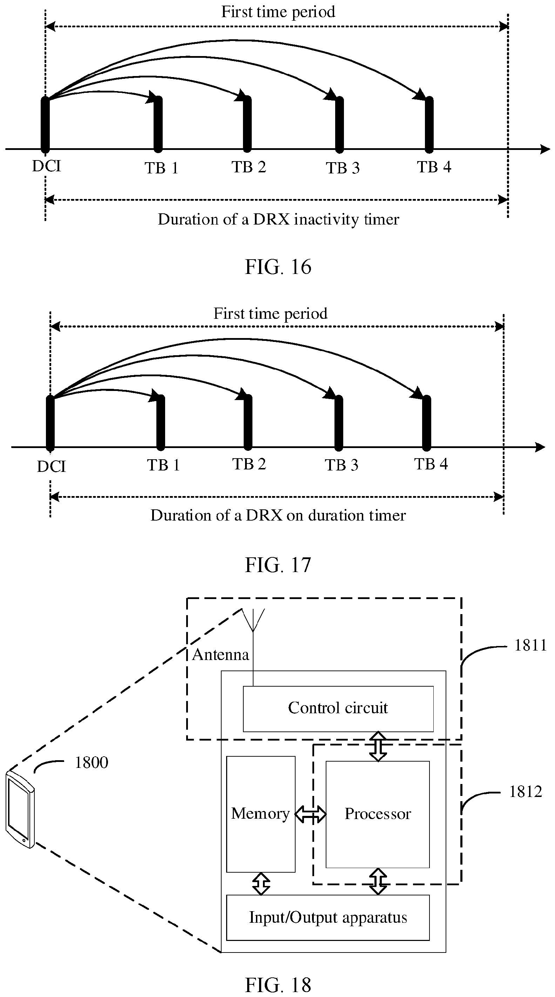

FIG. 16 is used as an example. The terminal receives DCI (the second control information) from the radio access network device, and four TBs (which are respectively a TB 1 to a TB 4) are scheduled by using the DCI for transmission on M=4 physical shared channels. A first time period shown in the figure is a time period between the running end moment of the DRX inactivity timer and a receiving moment of the DCI.

Optionally, in part 1320, that the terminal determines to skip monitoring the PDCCH in the first time period includes: The terminal determines, based on second tail packet indication information, to skip monitoring the PDCCH in the first time period, where the second tail packet indication information indicates that data carried on the M^{th} physical shared channel (the last physical shared channel in the M physical shared channels) in the M physical shared channels includes data of a last data packet corresponding to a data frame. The second tail packet indication information can indicate, to the terminal, that the M^{th} physical shared channel in the M physical shared channels includes the data of the last data packet corresponding to the data frame. In other words, after transmission of the data carried on the M^{th} physical shared channel is completed, transmission of any data packet corresponding to the data frame is no longer required. In this case, the terminal determines, based on the second tail packet indication information, to skip monitoring the PDCCH in the first time period, so that power consumption of the terminal can be reduced, and a battery life can be prolonged.

It may be understood that, when the second tail packet indication information is not received, it indicates that transmission of a data packet corresponding to the data frame is not completed. In this case, the terminal may skip monitoring the PDCCH in a time period between the M^{th} physical shared channel and the receiving of the second control information, but still monitor the PDCCH in a time period between the M^{th} physical shared channel and the expiration of the DRX inactivity timer, to complete transmission of a remaining data packet of the data frame.

The second tail packet indication information may be carried on the M^{th} physical shared channel (for example, an M^{th} PDSCH), or may be included in the second control information. For a specific implementation in which the second tail packet indication information is carried on the M^{th} PDSCH, refer to the descriptions in which the first tail packet indication information is carried on the PDSCH in the method 800. Details are not described herein again. For a specific implementation in which the second tail packet indication information is included in the second control information, refer to the descriptions in which the first tail packet indication information is included in the first control information in the method 800. Details are not described herein again.

In another possible implementation of the first time period, the first time period may be used in a DRX mechanism. Specifically, in part 1310, that the radio access network device sends second control information to the terminal includes: The radio access network device sends the second control information to the terminal in a DRX active time period. That the terminal receives the second control information includes: The terminal receives the second control information in the DRX active time period. The first time period is a time period between expiration of a DRX on duration timer and the receiving of the second control information. If the DRX on duration timer is started or restarted when the second control information is received, in this implementation, the duration of the first time period may also be understood as being equal to duration of the DRX on duration timer. In this implementation, the terminal may additionally skip monitoring the PDCCH in a time period between the last physical shared channel scheduled by using the second control information and a running end moment of the DRX on duration timer, so that power consumption of the terminal can be further reduced.

FIG. 17 is used as an example. The terminal receives DCI (the second control information) from the radio access network device, and four TBs (which are respectively a TB 1 to a TB 4) are scheduled by using the DCI for transmission on M=4 physical shared channels. A first time period shown in the figure is a time period between the running end moment of the DRX on duration timer and a receiving moment of the DCI.

Optionally, in part 1320, that the terminal determines to skip monitoring the PDCCH in the first time period includes: The terminal determines, based on second tail packet indication information, to skip monitoring the PDCCH in the first time period, where the second tail packet indication information indicates that data carried on the M^{th} physical shared channel (the last physical shared channel in the M physical shared channels) in the M physical shared channels includes data of a last data packet corresponding to a data frame. The second tail packet indication information can indicate, to the terminal, that the M^{th} physical shared channel in the M physical shared channels includes the data of the last data packet corresponding to the data frame. In other words, after transmission of the data carried on the M^{th} physical shared channel is completed, transmission of any data packet corresponding to the data frame is no longer required. In this case, the terminal determines, based on the second tail packet indication information, to skip monitoring the PDCCH in the first time period, so that power consumption of the terminal can be reduced, and a battery life can be prolonged.

It may be understood that, when the second tail packet indication information is not received, it indicates that transmission of a data packet corresponding to the data frame is not completed. In this case, the terminal may skip monitoring the PDCCH in a time period between the M^{th} physical shared channel and the receiving of the second control information, but still monitor the PDCCH in a time period between the M^{th} physical shared channel and the expiration of the DRX on duration timer, to complete transmission of a remaining data packet of the data frame.

The second tail packet indication information may be carried on the M^{th} physical shared channel (for example, an M^{th} PDSCH), or may be included in the second control information. For a specific implementation in which the second tail packet indication information is carried on the M^{th} PDSCH, refer to the descriptions in which the first tail packet indication information is carried on the PDSCH in the method 800. Details are not described herein again. For a specific implementation in which the second tail packet indication information is included in the second control information, refer to the descriptions in which the first tail packet indication information is included in the first control information in the method 800. Details are not described herein again.

In correspondence to the method provided in the foregoing method embodiments, embodiments of this application further provide a corresponding apparatus, including corresponding modules configured to perform the foregoing embodiments. The modules may be software, hardware, or a combination of software and hardware.

FIG. 18 is a diagram of a structure of a terminal. The terminal is applicable to the scenario shown in FIG. 1, FIG. 2, FIG. 3, FIG. 4, or FIG. 5. The terminal or a component in the terminal may perform the foregoing method 800, method 1300, and various possible implementations. For ease of description, FIG. 18 merely shows main components of the terminal. As shown in FIG. 18, the terminal 1800 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the terminal is powered on, the processor may read a software program in a storage unit, interpret and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 18 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 18 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a receiving function and a sending function may be considered as a transceiver unit 1811 of the terminal 1800, and the processor having a processing function may be considered as a processing unit 1812 of the terminal 1800. As shown in FIG. 18, the terminal 1800 includes the transceiver unit 1811 and the processing unit 1812. The transceiver unit may also be referred to as a transceiver, a transceiver machine, a transceiver apparatus, or the like. Optionally, a component configured to implement the receiving function in the transceiver unit 1811 may be considered as a receiving unit, and a component configured to implement the sending function in the transceiver unit 1811 may be considered as a sending unit. That is, the transceiver unit 1811 includes the receiving unit and the sending unit. For example, the receiving unit may also be referred to as a receiver machine, a receiver, a receiving circuit, or the like. The sending unit may be referred to as a transmitter machine, a transmitter, a transmitting circuit, or the like. Optionally, the receiving unit and the sending unit may be an integrated unit, or may be a plurality of independent units. The receiving unit and the sending unit may be located in one geographical location, or may be distributed in a plurality of geographical locations.

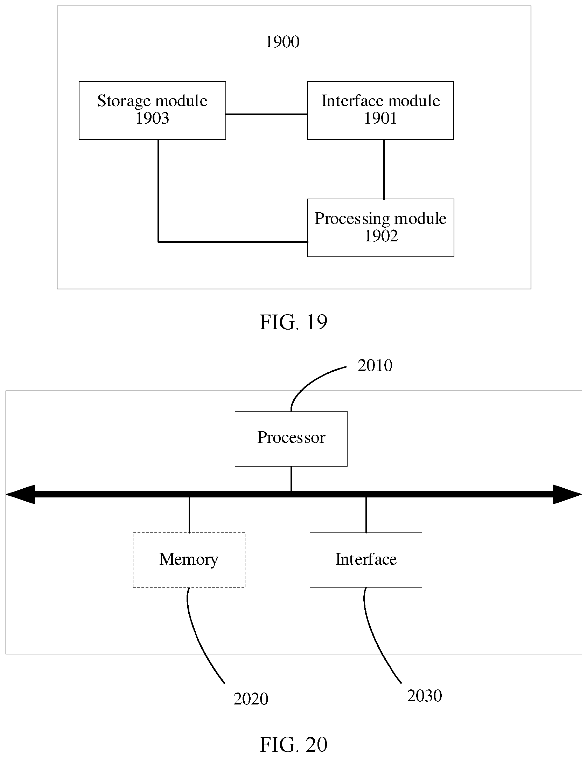

As shown in FIG. 19, another embodiment of this application provides an apparatus 1900. The apparatus may be a terminal, or may be a component (for example, an integrated circuit or a chip) of a terminal. Alternatively, the apparatus may be a radio access network device, a component (for example, an integrated circuit or a chip) of a radio access network device, or a logical module or software that can implement all or some functions of a radio access network device. The apparatus may alternatively be another communication module. For example, the apparatus 1900 may implement functions of the radio access network device in the method 800, the method 1300, and various possible implementations, or the apparatus 1900 may implement functions of the terminal in the method 800, the method 1300, and various possible implementations. The apparatus 1900 may include an interface module 1901 (or referred to as an interface unit) and a processing module 1902 (or referred to as a processing unit), and may further include a storage module 1903 (or referred to as a storage unit).

In a possible design, one or more modules in FIG. 19 may be implemented by one or more processors, may be implemented by one or more processors and one or more memories, may be implemented by one or more processors and one or more transceivers, or may be implemented by one or more processors, one or more memories, and one or more transceivers. This is not limited in embodiments of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the apparatus 1900 includes the processing module 1902 and the interface module 1901. For example, the apparatus 1900 may be a terminal, may be a component (for example, a processor, a chip, or a chip system) of the terminal, or may be a logical module or software that can implement all or some functions of the terminal. The interface module 1901 is configured to receive first control information in a DRX active time period. The processing module 1902 is configured to control, based on the first control information, the apparatus 1900 to receive first data on a PDSCH. The processing module 1902 is further configured to stop a DRX inactivity timer or determine not to restart the DRX inactivity timer based on first tail packet indication information. The first tail packet indication information indicates that the first data includes data of a last data packet corresponding to a data frame. Optionally, the first control information is DCI carried on a PDCCH, and the DCI is used for scheduling the transmission of the first data on the PDSCH.

In some possible implementations of the apparatus 1900, the first tail packet indication information is carried on the PDSCH.

In a possible implementation in which the first tail packet indication information is carried on the PDSCH, the PDSCH carries a MAC CE, and the first tail packet indication information is carried in the MAC CE.

In a possible implementation in which the first tail packet indication information is carried in the MAC CE, the MAC CE that carries the first tail packet indication information is identified by a predefined LCID or an eLCID. The LCID and the eLCID may be included in a MAC subheader.

In another possible implementation in which the first tail packet indication information is carried in the MAC CE, the first tail packet indication information is carried by using a part or all of reserved bits (for example, reserved bits in an "R field") in the MAC subheader of the MAC CE.

In another possible implementation of the first tail packet indication information, the first tail packet indication information is included in the first control information.

In some possible implementations of the apparatus 1900, the stopping a DRX inactivity timer may be understood as follows: If the DRX inactivity timer is running when the first tail packet indication information is received, the running DRX inactivity timer is stopped.

In some possible implementations of the apparatus 1900, the determining not to restart the DRX inactivity timer may be understood as follows: If the DRX inactivity timer is running when the first tail packet indication information is received, after the running DRX-inactivity timer expires, the DRX inactivity timer is not restarted.

In a possible design, the apparatus 1900 includes the interface module 1901. For example, the apparatus 1900 may be a radio access network device, may be a component (for example, a processor, a chip, or a chip system) of the radio access network device, or may be a logical module or software that can implement all or some functions of the radio access network device. The interface module 1901 is configured to send first control information in a DRX active time period, where the first control information is used for scheduling transmission of first data on a PDSCH. The first control information includes first tail packet indication information, or the PDSCH carries the first tail packet indication information. The first tail packet indication information indicates that the first data includes data of a last data packet corresponding to a data frame, and the first tail packet indication information indicates to stop a DRX inactivity timer or determine not to restart the DRX inactivity timer. The sending first control information in a DRX active time period may be understood as sending the first control information to a terminal in a DRX active time period of the terminal. Optionally, the first control information is DCI carried on a PDCCH, and the DCI is used for scheduling the transmission of the first data on the PDSCH.

In some possible implementations of the apparatus 1900, the first tail packet indication information is carried on the PDSCH.

In a possible implementation in which the first tail packet indication information is carried on the PDSCH, the PDSCH carries a MAC CE, and the first tail packet indication information is carried in the MAC CE.

In a possible implementation in which the first tail packet indication information is carried in the MAC CE, the MAC CE that carries the first tail packet indication information is identified by a predefined LCID or an eLCID. The LCID and the eLCID may be included in a MAC subheader.

In another possible implementation in which the first tail packet indication information is carried in the MAC CE, the first tail packet indication information is carried by using a part or all of reserved bits (for example, reserved bits in an "R field") in the MAC subheader of the MAC CE.

In another possible implementation of the first tail packet indication information, the first tail packet indication information is included in the first control information.

In a possible design, the apparatus 1900 includes the processing module 1902 and the interface module 1901. For example, the apparatus 1900 may be a terminal, may be a component (for example, a processor, a chip, or a chip system) of the terminal, or may be a logical module or software that can implement all or some functions of the terminal. The interface module 1901 is configured to receive second control information, where the second control information is used for scheduling data transmission on M physical shared channels, and M is an integer greater than 1. The processing module 1902 is configured to control, based on the second control information, the apparatus 1900 to skip monitoring a PDCCH in a first time period since the second control information is received. It may be understood that the physical shared channel may be a PDSCH, or may be a PUSCH. One physical shared channel may carry data corresponding to one TB, or may carry data corresponding to a plurality of TBs. The M physical shared channels may be consecutive in time, or may have time intervals. The second control information may be understood as a single piece of DCI used for scheduling data transmission on a plurality of physical shared channels.

In some possible implementations of the apparatus 1900, the first time period is a time period between an M^{th} physical shared channel and receiving of the second control information. For example, the second control information may indicate the first time period, and the second control information may include a PDCCH monitoring adaptation indication field. The processing module 1902 may control, based on a bit value of the PDCCH monitoring adaptation indication field and a predefined correspondence, the apparatus 1900 to skip monitoring the PDCCH in the first time period. The processing module 1902 may indicate a maximum K0 value based on a start and length indicator value (start and length indicator value, SLIV) field included in the second control information, to determine first duration. For example, the maximum K0 value may be used as the first duration.

In some possible implementations of the apparatus 1900, the interface module 1901 is further configured to send feedback information, where the feedback information indicates whether the data transmission on the M physical shared channels succeeds. The first time period is a time period between sending of the feedback information and receiving of the second control information.

In some possible implementations of the apparatus 1900, that the interface module 1901 is configured to receive second control information includes: The interface module 1901 is configured to receive the second control information in the DRX active time period. The first time period is a time period between expiration of a DRX inactivity timer and the receiving of the second control information.

In some possible implementations of the apparatus 1900, that the interface module 1901 is configured to receive second control information includes: The interface module 1901 is configured to receive the second control information in the DRX active time period. The first time period is a time period between expiration of a DRX on duration timer and the receiving of the second control information.

In some possible implementations of the apparatus 1900, that the processing module 1902 is configured to control the apparatus 1900 to skip monitoring the PDCCH in the first time period includes: The processing module 1902 is configured to control, based on second tail packet indication information, the apparatus 1900 to skip monitoring the PDCCH in the first time period, where the second tail packet indication information indicates that data carried on the M^{th} physical shared channel (the last physical shared channel in the M physical shared channels) includes data of a last data packet corresponding to a data frame.

Optionally, the second tail packet indication information may be carried on the M^{th} physical shared channel (for example, an M^{th} PDSCH), or may be included in the second control information. For a specific implementation in which the second tail packet indication information is carried on the M^{th} PDSCH, refer to the foregoing descriptions in which the first tail packet indication information is carried on the PDSCH. Details are not described herein again. For a specific implementation in which the second tail packet indication information is included in the second control information, refer to the foregoing descriptions in which the first tail packet indication information is included in the first control information. Details are not described herein again.

In a possible design, the apparatus 1900 includes the interface module 1901. For example, the apparatus 1900 may be a radio access network device, may be a component (for example, a processor, a chip, or a chip system) of the radio access network device, or may be a logical module or software that can implement all or some functions of the radio access network device. The interface module 1901 is configured to send second control information, where the second control information is used for scheduling data transmission on M physical shared channels, M is an integer greater than 1, and the second control information further indicates to skip monitoring a physical downlink control channel PDCCH in a first time period since the second control information. It may be understood that the physical shared channel may be a PDSCH, or may be a PUSCH. One physical shared channel may carry data corresponding to one TB, or may carry data corresponding to a plurality of TBs. The M physical shared channels may be consecutive in time, or may have time intervals. The second control information may be understood as a single piece of DCI used for scheduling data transmission on a plurality of physical shared channels.

In some possible implementations of the apparatus 1900, the first time period is a time period between an M^{th} physical shared channel and receiving of the second control information.

In some possible implementations of the apparatus 1900, the interface module 1901 is further configured to receive feedback information, where the feedback information indicates whether the data transmission on the M physical shared channels succeeds. The first time period is a time period between receiving of the feedback information and sending of the second control information.

In some possible implementations of the apparatus 1900, that the interface module 1901 is configured to send second control information includes: The interface module 1901 is configured to send the second control information in the DRX active time period. The first time period is a time period between expiration of a DRX inactivity timer and the sending of the second control information. The sending the second control information in a DRX active time period may be understood as sending the second control information to a terminal in a DRX active time period of the terminal.

In some possible implementations of the apparatus 1900, that the interface module 1901 is configured to send second control information includes: The interface module 1901 is configured to send the second control information in the DRX active time period. The first time period is a time period between expiration of a DRX on duration timer and the sending of the second control information. The sending the second control information in a DRX active time period may be understood as sending the second control information to a terminal in a DRX active time period of the terminal.

In some possible implementations of the apparatus 1900, the second control information includes second tail packet indication information, or the M^{th} physical shared channel (the last physical shared channel in the M physical shared channels) carries the second tail packet indication information. The second tail packet indication information indicates that data carried on the M^{th} physical shared channel includes data of a last data packet corresponding to a data frame, and it is further determined, based on the second tail packet indication information, to skip monitoring the PDCCH in the first time period.

Optionally, the second tail packet indication information may be carried on the M^{th} physical shared channel (for example, an M^{th} PDSCH), or may be included in the second control information. For a specific implementation in which the second tail packet indication information is carried on the M^{th} PDSCH, refer to the foregoing descriptions in which the first tail packet indication information is carried on the PDSCH. Details are not described herein again. For a specific implementation in which the second tail packet indication information is included in the second control information, refer to the foregoing descriptions in which the first tail packet indication information is included in the first control information. Details are not described herein again.

It may be understood that for beneficial effects corresponding to the apparatus 1900 and various possible implementations, refer to the descriptions in the foregoing method embodiments or content in the summary. Details are not described herein again.

Optionally, the apparatus 1900 may further include the storage module 1903, configured to store data or instructions (which may also be referred to as code or a program). The other modules may interact with or be coupled to the storage module, to implement corresponding methods or functions. For example, the processing module 1902 may read the data or the instructions in the storage module 1903, so that the apparatus 1900 implements the method in the foregoing embodiments.

In an example, the module in the foregoing apparatus may be one or more integrated circuits configured to implement the foregoing methods, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

FIG. 20 is a diagram of an apparatus according to an embodiment of this application. The apparatus may be configured to implement the method 900, the method 1100, the method 1300, the method 1600, and various possible implementations. As shown in FIG. 20, the apparatus includes a processor 2010 and an interface 2030. The processor 2010 is coupled to the interface 2030. The interface 2030 is configured to communicate with another module or device. The interface 2030 may be a transceiver or an input/output interface. The interface 2030 may be, for example, an interface circuit. Optionally, the apparatus further includes a memory 2020, configured to store instructions executed by the processor 2010, input data required by the processor 2010 to run the instructions, or data generated after the processor 2010 runs the instructions.

The method 900, the method 1100, the method 1300, the method 1600, and various possible implementations may be implemented by the processor 2010 invoking a program or the instructions stored in the memory 2020. The memory 2020 may be inside the apparatus, or may be outside the apparatus. This is not limited in this application.

Optionally, a function/implementation process of the interface module 1901 and the processing module 1902 in FIG. 19 may be implemented by the processor 2010 in the apparatus shown in FIG. 20. Alternatively, a function/implementation process of the processing module 1902 in FIG. 19 may be implemented by the processor 2010 in the apparatus shown in FIG. 20, and a function/implementation process of the interface module 1901 in FIG. 19 may be implemented by the interface 2030 in the apparatus shown in FIG. 20. For example, the function/implementation process of the interface module 1901 may be implemented by the processor invoking program instructions in the memory to drive the interface 2030.

When the apparatus is a chip used in a terminal, the chip in the terminal implements functions of the terminal in the foregoing method embodiments. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

Steps of the method described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may be connected to the processor, so that the processor can read information from the storage medium and write information to the storage medium. Optionally, the storage medium may alternatively be integrated into a processor. The processor and the storage media may be disposed in an ASIC.

This application further provides a computer-readable medium. The computer-readable medium stores a computer program. When the computer program is executed by a computer, a function of any one of the foregoing method embodiments is implemented.

This application further provides a computer program product. When the computer program product is executed by a computer, a function of any one of the foregoing method embodiments is implemented.

For same or similar parts in embodiments of this application, refer to each other. In embodiments of this application and the implementations/implementing methods/implementation methods in the embodiments, unless otherwise specified or logically conflicting, terms and/or descriptions between different embodiments and between the implementations/implementing methods/implementation methods in the embodiments are consistent and may be mutually referenced, and technical features in different embodiments and implementations/implementing methods/implementation methods in the embodiments may be combined to form new embodiments, implementations, implementing methods, or implementation methods according to internal logical relationships. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data transmission method, comprising:
receiving first control information in a discontinuous reception DRX active time period;
receiving first data on a physical downlink shared channel PDSCH based on the first control information; and
stopping a DRX inactivity timer or determining not to restart the DRX inactivity timer based on first tail packet indication information, wherein
the first tail packet indication information indicates that the first data comprises data of a last data packet corresponding to a data frame.

2. The method according to claim 1, wherein the first tail packet indication information is carried on the PDSCH.

3. The method according to claim 2, wherein the PDSCH carries a media access control MAC control element CE, and the first tail packet indication information is carried in the MAC CE.

4. The method according to claim 3, wherein the MAC CE is identified by a predefined logical channel identifier LCID or an extended logical channel identifier eLCID.

5. The method according to claim 3, wherein the first tail packet indication information is carried by a part or all of reserved bits in a MAC subheader of the MAC CE.

6. The method according to claim 1, wherein the first tail packet indication information is comprised in the first control information.

7. A data transmission method, comprising:
sending first control information in a discontinuous reception DRX active time period, wherein the first control information is used for scheduling transmission of first data on a physical downlink shared channel PDSCH, wherein
the first control information comprises first tail packet indication information, or the PDSCH carries the first tail packet indication information; and
the first tail packet indication information indicates that the first data comprises data of a last data packet corresponding to a data frame, and the first tail packet indication information indicates to stop a DRX inactivity timer or determine not to restart the DRX inactivity timer.

8. The method according to claim 7, wherein the PDSCH carries the first tail packet indication information.

9. The method according to claim 8, wherein the PDSCH carries a media access control MAC control element CE, and the first tail packet indication information is carried in the MAC CE.

10. The method according to claim 9, wherein the MAC CE is identified by a predefined logical channel identifier LCID or an extended logical channel identifier eLCID.

11. The method according to claim 9, wherein the first tail packet indication information is carried by a part or all of reserved bits in a MAC subheader of the MAC CE.

12. A data transmission method, comprising:
receiving second control information, wherein the second control information is used for scheduling data transmission on M physical shared channels, and M is an integer greater than 1; and
determining, based on the second control information, to skip monitoring a physical downlink control channel PDCCH in a first time period since the second control information is received.

13. The method according to claim 12, wherein the first time period is a time period between an M^{th} physical shared channel and receiving of the second control information.

14. The method according to claim 12, wherein the method further comprises: sending feedback information, wherein the feedback information indicates whether the data transmission on the M physical shared channels succeeds, wherein
the first time period is a time period between sending of the feedback information and receiving of the second control information.

15. The method according to claim 12, wherein
the receiving second control information comprises: receiving the second control information in a discontinuous reception DRX active time period, wherein
the first time period is a time period between expiration of a DRX inactivity timer and receiving of the second control information.

16. The method according to claim 12, wherein
the receiving second control information comprises: receiving the second control information in a DRX active time period, wherein
the first time period is a time period between expiration of a DRX on duration timer and receiving of the second control information.

17. The method according to any one of claims 14 to 16, wherein the determining to skip monitoring a PDCCH in a first time period comprises: determining, based on second tail packet indication information, to skip monitoring the PDCCH in the first time period, wherein the second tail packet indication information indicates that data carried on an M^{th} physical shared channel comprises data of a last data packet corresponding to a data frame.

18. The method according to claim 17, wherein the second tail packet indication information is carried on the M^{th} physical shared channel.

19. The method according to claim 18, wherein the M^{th} physical shared channel carries a media access control MAC control element CE, and the second tail packet indication information is carried in the MAC CE.

20. The method according to claim 19, wherein the MAC CE is identified by a predefined logical channel identifier LCID or an extended logical channel identifier eLCID.

21. The method according to claim 19, wherein the second tail packet indication information is carried by a part or all of reserved bits in a MAC subheader of the MAC CE.

22. The method according to claim 17, wherein the second tail packet indication information is comprised in the second control information.

23. A data transmission method, comprising:
sending second control information, wherein the second control information is used for scheduling data transmission on M physical shared channels, M is an integer greater than 1, and the second control information further indicates to skip monitoring a physical downlink control channel PDCCH in a first time period since the second control information.

24. The method according to claim 23, wherein the first time period is a time period between an M^{th} physical shared channel and sending of the second control information.

25. The method according to claim 23, wherein the method further comprises: receiving feedback information, wherein the feedback information indicates whether the data transmission on the M physical shared channels succeeds; and
the first time period is a time period between receiving of the feedback information and sending of the second control information.

26. The method according to claim 23, wherein
the sending second control information comprises: sending the second control information in a discontinuous reception DRX active time period, wherein
the first time period is a time period between expiration of a DRX inactivity timer and sending of the second control information.

27. The method according to claim 23, wherein
the sending second control information comprises: sending the second control information in a DRX active time period, wherein
the first time period is a time period between expiration of a DRX on duration timer and sending of the second control information.

28. The method according to any one of claims 25 to 27, wherein the second control information comprises second tail packet indication information, or the M^{th} physical shared channel carries the second tail packet indication information; and
the second tail packet indication information indicates that data carried on the M^{th} physical shared channel comprises data of a last data packet corresponding to a data frame, and it is further determined, based on the second tail packet indication information, to skip monitoring the PDCCH in the first time period.

29. A communication apparatus, comprising a processor, wherein the processor is coupled to a memory, the memory is configured to store a program or instructions, and when the program or the instructions are executed by the processor, the apparatus is enabled to perform the method according to any one of claims 1 to 6, the method according to any one of claims 7 to 11, the method according to any one of claims 12 to 22, or the method according to any one of claims 23 to 28.

30. A computer-readable storage medium, wherein the computer-readable storage medium stores instructions, and when the instructions are executed, a computer is enabled to perform the method according to any one of claims 1 to 6, the method according to any one of claims 7 to 11, the method according to any one of claims 12 to 22, or the method according to any one of claims 23 to 28.

31. A communication apparatus, comprising a module configured to perform the method according to any one of claims 1 to 6 or the method according to any one of claims 12 to 22.

32. A communication apparatus, comprising a module configured to perform the method according to any one of claims 7 to 11 or the method according to any one of claims 23 to 28.

33. A computer program product, comprising computer program code, wherein when the computer program code is run, the method according to any one of claims 1 to 6, the method according to any one of claims 7 to 11, the method according to any one of claims 12 to 22, or the method according to any one of claims 23 to 28 is performed.

34. A communication system, comprising the apparatus according to claim 31 and the apparatus according to claim 32.
